Europäisches Patentamt

European Patent Office

Office européen des brevets

(11) Numéro de publication: **0 026 895**
**A1**

## (12) DEMANDE DE BREVET EUROPEEN

(21) Numéro de dépôt: **80105878.5**

(22) Date de dépôt: **27.09.80**

(51) Int. Cl.³: **B 29 C 17/07**

(30) Priorité: **09.10.79 CH 9069/79**

(43) Date de publication de la demande: **15.04.81**
**Bulletin 81/15**

(84) Etats contractants désignés: **BE DE FR GB IT NL SE**

(71) Demandeur: **MOTOSACOCHE S.A., 56, route des Acacias, CH-1227 Carouge, Genève (CH)**

(72) Inventeur: **Collombin, André-Marcel, 29, Chemin des Palettes, CH-1212 Grand-Lancy, Genève (CH)**

(74) Mandataire: **Micheli, Michel Pierre et al, MICHELI & CIE 118, Rue du Rhône Case Postale 47, CH-1211 Geneve 6 (CH)**

(54) **Installation de production de récipients par étirage-soufflage de préformes en matière plastique.**

(57) L'installation comprend un dispositif de transport des préformes comportant des supports (2, 3) indépendants recevant chacun une préforme coulissant dans des glissières (1) formant un polygone sous l'action de vérins d'angle (22, 23).

La longueur de cheminement peut être modifiée en rajoutant des sections de glissières (1) et l'entre-axe entre deux préformes adjacentes peut être modifié d'une partie à l'autre du cheminement.

## Installation de production de récipients par étirage-soufflage de préformes en matière plastique

Les machines ou installations d'étirage-soufflage d'une préforme en matière plastique existantes sont toutes conçues de manière à permettre l'entraînement desdites préformes sur un cheminement le long duquel se situent des postes de travail tels que four de chauffage et de conditionnement de la préforme, station d'étirage-soufflage et poste d'éjection de l'article fini. Les machines existantes comportent un cheminement déterminé fixe ce qui nuit à la flexibilité d'utilisation de la machine, le temps de chauffage des préformes notamment, dépendant grandement de la matière plastique utilisée. En pratique, ceci conduit à construire des machines spécifiques pour le traitement de différentes matières plastiques ce qui représente un investissement important pour l'utilisateur.

La présente invention a pour objet une installation de production de récipients par étirage-soufflage comportant un dispositif d'entraînement de préformes sur un cheminement le long duquel se trouvent des moyens de conditionnement et de chauffage, une station d'étirage-soufflage et un poste d'extraction, tendant à remédier aux inconvénients précités, par le fait que le dispositif d'entraînement des préformes se compose d'une pluralité de supports indépendants disposés côte-à-côte et coulissant dans une glissière s'étendant le long dudit cheminement, par le fait que cette glissière définit vue en plan un cheminement comportant plusieurs parties rectilignes formant des angles entre-elles, et par le fait que l'avancement pas à pas des supports le long de la glissière est commandé par des poussoirs disposés dans chaque angle de la glissière.

Le dessin annexé illustre schématiquement et à titre d'exemple une forme d'exécution de l'installation selon l'invention.

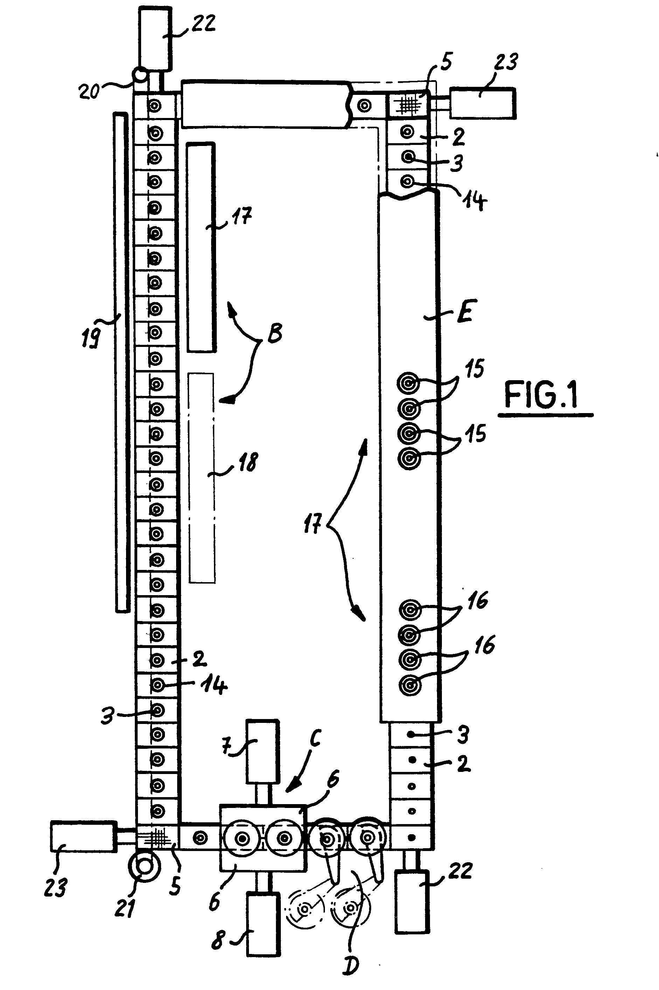

La figure 1 est une vue schématique de dessus de l'installation.

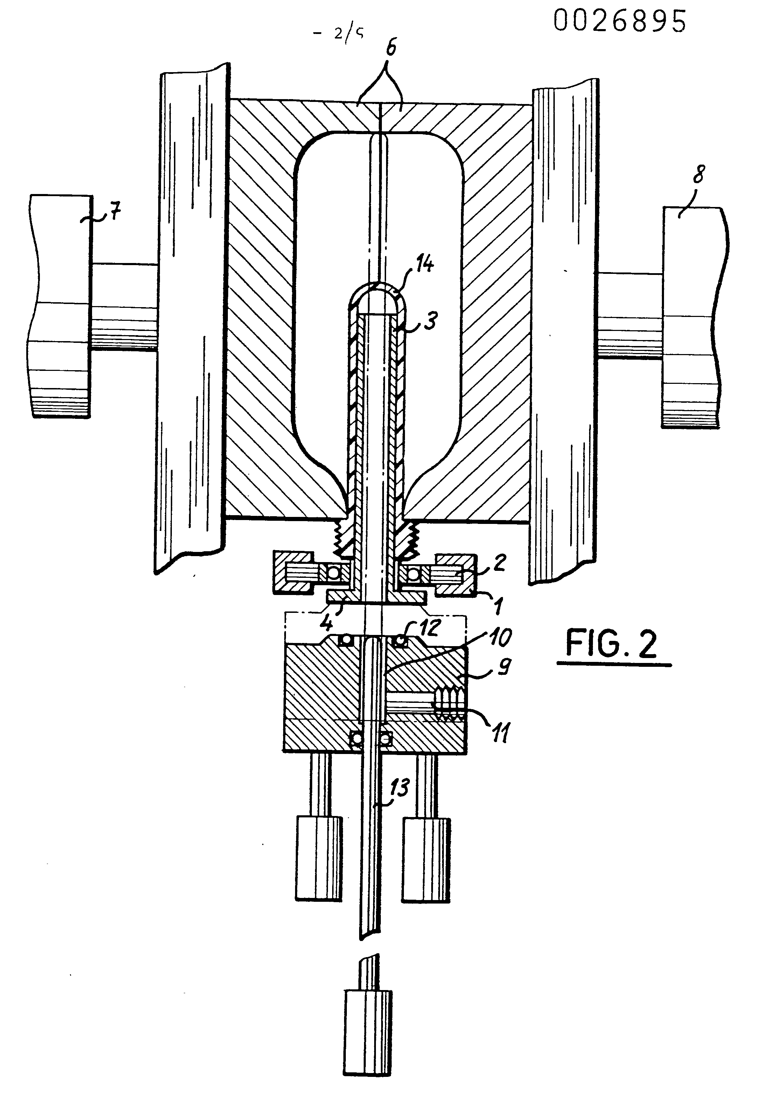

La figure 2 est une vue en coupe de la station d'étirage-soufflage.

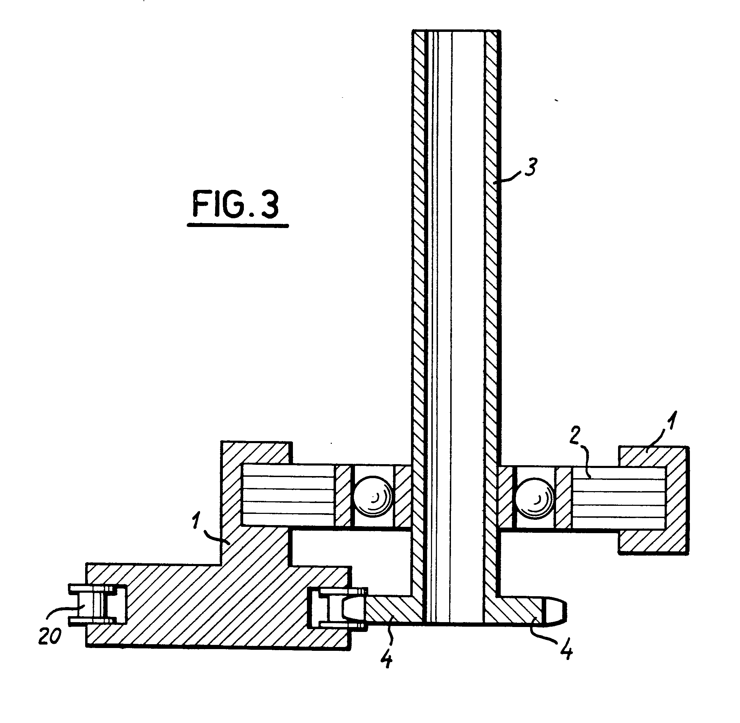

La figure 3 illustre en coupe un détail de l'entraînement des préformes.

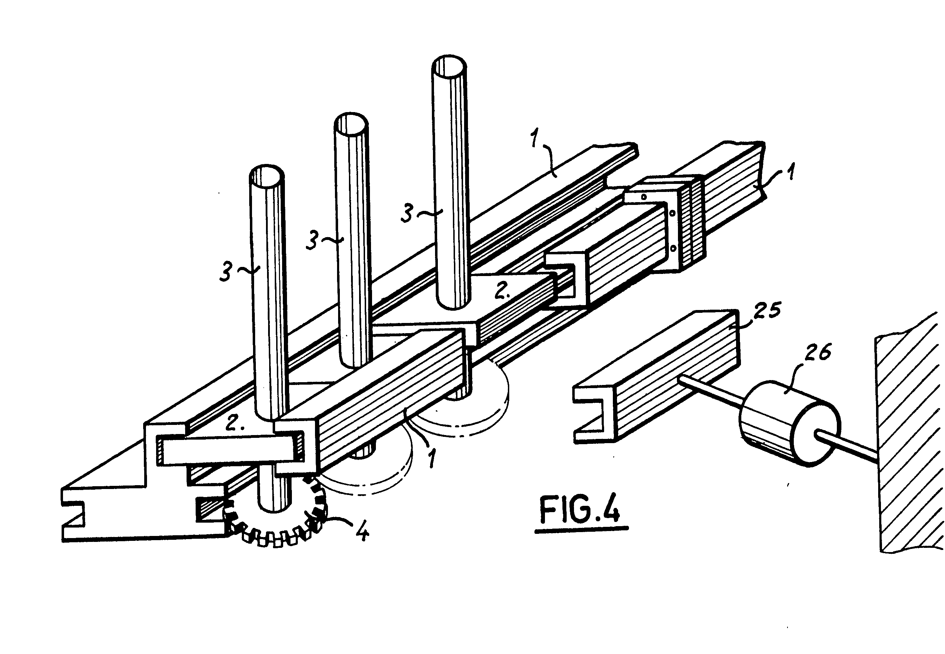

La figure 4 illustre en perspective quelques particularités du dispositif d'entraînement des préformes.

La figure 5 illustre une forme particulière du cheminement utilisé dans une variante.

L'installation de production de récipients en matière plastique par étirage-soufflage illustrée comporte, répartis le long d'un cheminement au moins une station de réception A des préformes, un dispositif de conditionnement et de chauffage B de ces préformes pour les amener à leur température d'étirage-soufflage, une station d'étirage-soufflage C et un poste d'extraction des articles finis D.

L'installation comporte encore un dispositif de transport des préformes le long dudit cheminement. Ce dispositif de transport comporte des glissières 1 définissant le cheminement formant vues de dessus un rectangle. Sur deux côtés du rectangle du cheminement les glissières sont larges tandis que sur les deux autres côtés, les petits côtés du cheminement, les glissières sont plus étroites.

D'une façon générale le cheminement présente vu de dessus plusieurs parties rectilignes formant des angles entre-elles. Ce cheminement peut être fermé sur lui-même et présenter la forme d'un polygone, ou ouvert.

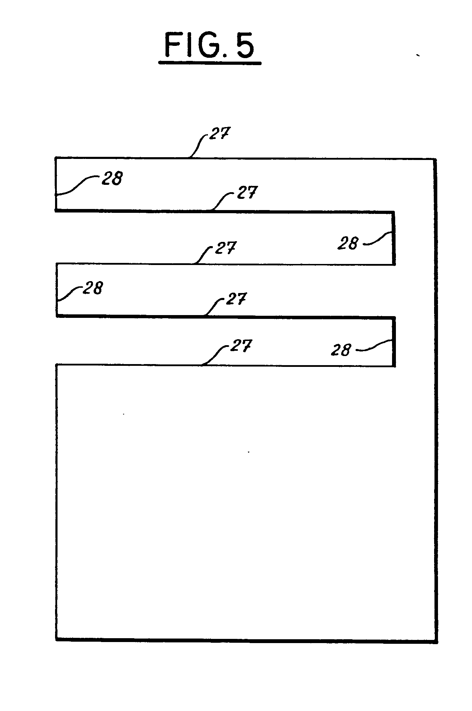

Dans la variante illustrée à la figure 5, le cheminement peut également présenter, pour en augmenter la longueur et donc la capacité de stockage de préformes, plusieurs parties rectilignes parallèles 27 disposées côte-à-côte et reliées a leurs extrémités opposées par de petits tronçons 28 de glissière.

Plus particulièrement le cheminement est formé de portions rectilignes, deux portions se suivant formant un angle droit entre-elles.

Des supports individuels sont placés côte à côte dans ces glissières et comportent une plaque 2 guidée dans la glissière et coulissant librement dans celle-ci. Ces plaques 2 sont munies d'un tube récepteur-porteur 3, destiné à recevoir une préforme, monté rotatif sur ladite plaque et dont l'extrémité inférieure est solidaire d'une roue dentée 4. Les plaques 2 sont rectangulaires et leur grand côté correspond à la largeur de la glissière large, s'étendant sur les longs côtés du cheminement, tandis que les petits côtés des plaques 2 correspondent à la largeur des glissières étroites formant les petits côtés du cheminement.

Les supports 2 remplissent entièrement les glissières 1 à l'exception de deux places, d'une dimension égale à un support chacune, disposées dans deux coins opposés 5 de la glissière.

Grâce à cette disposition on peut remarquer que l'entre-axe séparant deux tubes récepteurs 3 est plus faible sur les longs côtés de la glissière 1 que sur les petits côtés de cette glissière. L'entre-axe maximum séparant deux tubes récepteurs 3 adjacents, donc situés sur les petits côtés de la glissière 1, correspond à l'entre-axe des deux cavités du moule 6 de la station d'étirage-soufflage.

Grâce à cette disposition, il est possible de disposer d'un nombre maximum de préformes en transport le long du cheminement, ces préformes étant rapprochées les unes des autres sur les grands côtés du cheminement. La station d'étirage-soufflage C est donc placée sur un des petits côtés du cheminement et comporte un moule 6 en deux parties dont la translation est commandée par des vérins 7,8.

Le moule 6 en deux parties se situe au-dessus des glissières 1 et en position de service vient entourer

0026895

une préforme portée par le tube récepteur 3 d'une plaque 2 située au droit de la station d'étirage-soufflage. En-dessous de la plaque 2 et alignée sur le tube 3 en position de soufflage se trouve une contre-pièce 9 déplaçable verticalement, destinée à venir en contact avec la face inférieure de la roue dentée 4. De ce fait, l'intérieur du tube récepteur 3 est mis en contact avec un perçage 10 relié par un passage 11 à une source d'air comprimé. Un joint 12 assure l'étanchéité entre la contre-pièce 9 et le tube récepteur 3.

Une tige d'étirage 13, coaxiale au tube récepteur en position de soufflage peut se déplacer, sous l'action d'un vérin, verticalement pour son introduction dans le tube récepteur 3 et provoquer l'étirage de la préforme 14. Une fois la préforme étirée par cette tige 13 elle est gonflée par soufflage jusqu'à sa forme définitive contre la paroi du moule 6, l'air sous pression étant délivré à l'intérieur de la préforme entre la tige 13 et le tube 3.

Une partie au moins du cheminement suivi par les préformes et entouré d'une enceinte calorifugée E pour éviter la déperdition de chaleur des préformes chaudes provenant d'une machine à préformes. Ces préformes chaudes, c'est-à-dire à une température supérieure à la température ambiante, sont délivrées à travers des trous 15 prévus dans cette enceinte et placées chacune sur un tube 3.

Une seconde série de trous 16 est prévue dans cette enceinte pour introduire des préformes froides par exemple à partir d'un stock.

L'enceinte calorifugée E peut comporter une série de trous d'introduction s'étendant sur toute une section de celle-ci. Une station de distribution de préformes pourrait se déplacer le long de cette partie de l'enceinte et coopérer avec des trous déterminés en fonction de la température des préformes.

Lors de leur transport le long du cheminement défini par les glissières 1 les préformes traversent un dispositif de conditionnement qui comprend un four 17 amenant les préformes à leur température de soufflage. Un second four 18 est prévu qui n'est utilisé que lorsque l'installation est alimentée avec des préformes froides pour donner un appoint de chauffage. Un réflecteur 19 est prévu pour éviter une déperdition de chaleur.

Pour obtenir un chauffage uniforme des préformes sur toute leur périphérie, elles sont entraînées en rotation sur elles-mêmes pendant leur transport le long du grand côté du cheminement où sont placés les fours 17, 18. On prévoit à cet effet une chaîne 20 entraînée par un moteur 21. Cette chaîne entre en prise avec les roues dentées 4 des supports 2 lorsque ceux-ci se déplacent le long du grand côté du cheminement comprenant les fours. Un guide pour cette chaîne est ménagé sur la glissière 1 de ce côté du cheminement.

L'entraînement des supports 2, 3 le long des glissières 1 s'effectue à l'aide de poussoirs actionnés par des vérins et situés dans le prolongement des parties rectilignes des glissières. Les vérins 22 sont actionnés et les supports 2, 3 situés sur les grands côtés du cheminement avancent d'un pas, les places vides 5 étant alors comblées. Puis les vérins 23 sont actionnés et ce sont les supports situés le long des petits côtés du cheminement qui sont avancés d'un pas.

On remarque que par ce système d'entraînement on a automatiquement un changement de direction des supports dans les glissières, les supports avancent transversalement le long des grands côtés du cheminement et longitudinalement le long des petits côtés de ce cheminement. Cette caractéristique permet d'obtenir facilement la modification de la distance séparant deux préformes entre les grands et petits côtés du cheminement simplement par les dimensions, longueurs et largeurs, des plaques 2 du support.

Il est très important de pouvoir modifier à volonté, par exemple en fonction de la matière plastique traitée, la longueur du cheminement pour faire varier le temps de chauffage par exemple. Avec cette installation une telle modification est facile, il suffit de rallonger les grands côtés du cheminement en ajoutant une section de glissières. A cet effet, les glissières sont prévues en section pouvant être raccordées les unes aux autres par exempleà l'aide de boulons 24.

Il est évident que dans une variante la largeur des glissières suivant les longs côtés du cheminement pourrait être égale à la largeur du support, la longueur des glissières suivant les petits côtés du cheminement étant alors égale à la longueur des supports. Ce qui est important est d'obtenir une modification de l'entre-axe des tubes supports entre deux parties adjacentes de la glissière formant le cheminement.

Les glissières peuvent comporter une partie amovible 25 pouvant être mise en place ou escamotée manuellement ou à l'aide d'un vérin 26. Grâce à cette disposition il est possible, en cours de fonctionnement, de prélever un support et sa préforme et de le remplacer par un autre support. Ceci est important soit pour éliminer une préforme malformée soit pour des opérations de contrôle de routine effectuées sur les préformes.

Les principaux avantages de cette installation sont:

1. La possibilité de modifier l'entre-axe entre deux préformes pendant leur transport le long du cheminement.

2. La possibilité pendant le fonctionnement de prélever une préforme et son support.

3. La possibilité de modifier la longueur du cheminement des préformes.

4. La possibilité, suivant la forme du cheminement de disposer d'un grand nombre de supports en transport le long du cheminement ce qui permet de disposer d'un temps important pour le chauffage, le réchauffage ou le conditionnement en température des préformes. Ceci est particulièrement important pour des matières difficiles à thermoformer. Ici ce temps de conditionnement n'est plus lié à la cadence de la machine.

De ce fait l'installation d'étirage-soufflage pour la production d'articles en matière plastique est très flexible, compacte et peu encombrante et d'une utilisation aisée.

0026895

## REVENDICATIONS

1. Installation de production de récipients par étirage-soufflage comportant un dispositif d'entraînement de préformes sur un cheminement le long duquel se trouvent des moyens de conditionnement et de chauffage, une station d'étirage-soufflage et un poste d'extraction, ce dispositif d'entraînement des préformes présentant une pluralité de supports indépendants disposés côte-à-côte et coulissant dans une glissière s'étendant le long dudit cheminement, formé de plusieurs parties rectilignes formant des angles entre-elles, caractérisée par le fait que l'avancement des supports le long de la glissière est commandé par des poussoirs disposés dans chaque angle de la glissière ; que chaque support est rectangulaire ; les glissières s'étendant dans une direction ayant une largeur correspondant à la longueur du support tandis que les glissières s'étendant dans la direction perpendiculaire présentent une largeur correspondant à la largeur du support ; et par le fait que les supports se déplacent longitudinalement le long des petites parties du cheminement et transversalement le long des grandes portions du cheminement de telle sorte que l'entre-axe des supports est différent sur les longues portions du cheminement que sur les petites portions de ce cheminement.

2. Installation selon la revendication 1 comportant un dispositif d'entraînement du tube récepteur en rotation sur lui-même sur une partie au moins du cheminement, caractérisée par le fait que ce dispositif d'entraînement en rotation du tube récepteur comporte une chaîne s'étendant le long d'une partie des glissières, dont un brin est en prise avec la roue dentée des supports, et par le fait qu'un moteur entraîne cette chaîne.

3. Installation selon l'une des revendications 1 ou 2, caractérisée par le fait que la longueur du cheminement est réglable par l'adjonction ou la suppression d'au moins une section de la glissière.

4. Installation selon l'une des revendications 1 à 3, caractérisée par le fait que l'avancement des supports s'effectue pas à pas.

5. Installation selon l'une des revendications 1 à 4, caractérisée par le fait que chaque support ne porte qu'une seule préforme.

0026895

FIG.1

0026895

FIG.2

FIG.3

**FIG.4**

# FIG.5

Office européen des brevets

**RAPPORT DE RECHERCHE EUROPEENNE**

0026895
Numéro de la demande

EP 80 10 5878

| | DOCUMENTS CONSIDERES COMME PERTINENTS | | CLASSEMENT DE LA DEMANDE (Int. Cl. 3) |
|---|---|---|---|
| Catégorie | Citation du document avec indication, en cas de besoin, des parties pertinentes | Revendica-tion concernée | B 29 C 17/07 |
| X | US - A - 3 339 230 (J.J. FARRELL) <br> * ensemble du brevet * <br> --- | 1,4 | |
| | FR - E - 83 224 (MARRICK) <br> * ensemble du brevet * <br> --- | 1,2,4 | |
| | FR - A - 1 287 667 (PLASTIC PRE-CISION TOOL) <br> * ensemble du brevet * <br> --- | 1,4 | |
| | US - A - 3 283 046 (EARL G. DE WITT) <br> * colonne 4, lignes 8-18; figures * <br> --- | 4,5 | **DOMAINES TECHNIQUES RECHERCHES (Int. Cl. 3)** <br><br> B 29 C 17/07 |
| A | FR - A - 1 307 954 (MARRICK) | | |
| A | FR - A - 2 196 236 (VAN LEER) | | |
| A | FR - A - 1 495 719 (MARRICK) | | |
| | -------- | | |

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achevement de la recherche | Examinateur |
|---|---|---|
| La Haye | 23.12.1980 | LABEEUW |

OEB Form 1503.1 06.78